# EUROPEAN PATENT SPECIFICATION

(11) **EP 1 239 732 B1**
(45) Date of publication and mention of the grant of the patent: **10.03.2004**
(21) Application number: 00991616.4
(22) Date of filing: 20.12.2000
(51) Int. Cl.: A01N 43/90, A01N 25/04, A23C 19/11, A23B 4/22, C12P 19/62

(54) **PRESERVING ACTIVE FUNGICIDE IN AN AQUEOUS SOLUTION**
VERFAHREN ZUR ERHALTUNG DER WIRKSAMKEIT EINES FUNGIZIDS IN WÄSSRIGER LÖSUNG
PRESERVATION DE L'ACTIVITE FONGICIDE EN SOLUTION AQUEUSE

(30) Priority: 21.12.1999 EP 99204586
(43) Date of publication of application: 18.09.2002
(73) Proprietor: DSM IP Assets B.V., 6411 TE Heerlen (NL)
(72) Inventor: DE HAAN, Ben, Rudolf, NL-2275 AW Voorburg (NL)
(74) Representative: Matulewicz, Emil Rudolf Antonius
(86) International application number: PCT/EP2000/013043
(87) International publication number: WO 2001/045513

(56) References cited:
- EP-A- 0 513 922
- EP-A- 0 750 853
- DE-A- 19 805 248
- US-A- 4 238 475
- DATABASE BIOSIS [Online] BIOSCIENCES INFORMATION SERVICE, PHILADELPHIA, PA, US; Prev197763037040 Antibiotiki, vol 21, nr 8,, 1976 VAINSHTEIN VA; ETINGOV E D; NAUMCHIK G N: "Sorption Complexes of Nystatin and Amphotericin B With Polyvinylpyrrolidone in Non-Aqueous Solvents" XP002140297

## Description

### Field of the invention

The present invention relates to the field of agriculture.

### Background of the invention

Polyene fungicides are used extensively in the prevention of fungal and yeast growth in a wide variety of applications. Polyene fungicides are used, for example, in the field of agriculture for preventing the deterioration of food products on the field and/or during storage and/or processing of the food.

To enable easy use of preparations comprising a polyene fungicide, it is essential that the activity of the polyene fungicide in said preparation is sufficiently stable to allow handling, shipment and/or storage of said preparation. Many different methods have been taken to preserve the activity of the polyene fungicide in a preparation, depending on the kind of polyene fungicide and the specific properties of other components in the preparation. For example, it has been shown that anti-oxidants, exclusion of light, high concentrations in relation to temperature may influence the stability of a polyene fungicide. Several methods for enhancing the stability have been described (Dekker, J. and Ark, P.A.,1959, Protection of antibiotic pimaricin from oxidation and ultraviolet light by chlorophyllin and other compounds. Antibiotics and Chemotherapy 9 : 327-332).

EP 750 853 discloses a method to enhance the microbial effect of an antimicrobial agent on a food product. Thereto a synergistic composition of a bacteriocin and a chelating agent is given having improved bactericidal properties.

US 4, 238, 475 describes a chewing gum destined to deliver water insoluble therapeutic substances, such as nystatin.

EP 513 922 relates to a method for enhancing and extending the effective antifungal activity in an antifungal coating composition, natamycin is used as an antifungal agent.

### Summary of the invention

In the present invention it has been found that the addtion of a chelating agent and/or an anti-oxidation agent to a solution comprising a polyene fungicide at least in part prevents deactivation of said polyene fungicide in said solution.
According to the invention there is thus provided a method for preserving the activity of a polyene fungicide in an aqueous solution which method comprises providing the said aqueous solution with a chelating agent and/or an anti-oxidation agent, wherein the said chelating agent and the said anti-oxidation agent are the same agent or are different agents.

The invention also provides:
- an aqueous solution comprising a polyene fungicide and a chelating agent and/or an anti-oxidation agent, wherein the said chelating agent and the said anti-oxidation agent are the same agent or are different agents;
- use of a chelating agent and/or an anti-oxidation agent in a method for preserving the activity of an aqueous solution comprising a polyene fungicide;
- a method for preserving the activity of a polyene fungicide in a polymer emulsion, which method comprises providing the said emulsion with a chelating agent and/or an anti-oxidation agent, wherein the said chelating agent and the said anti-oxidation agent are the same agent or are different agents;
- a polymer emulsion which comprise a polyene fungicide and a chelating agent and/or an anti-oxidation agent, wherein the said chelating agent and the said anti-oxidation agent are the same agent or different agents;
- a food coating comprising a polymer emulsion of the invention;
- a food coating comprising a polymer, a polyene fungicide and a chelating agent;
- a food comprising a polymer emulsion of the invention or a food coating of the invention;
- use of a chelating agent and/or an anti-oxidation agent in the preparation of a polymer emulsion comprising a polyene fungicide, wherein the activity of the said polyene fungicide in the said emulsion is preserved and/or not deactivated;
- use of a polymer emulsion of the invention or a food coating of the invention in the preparation of a food.

A polyene fungicide can be deactivated in several ways. For example, a chemical bond may be broken or changed resulting in a partially inactive form of the said polyene fungicide. For the present invention, deactivation typically implies the removal of active polyene fungicide from the solution due to degradation of the polyene fungicide into one or more at least in part inactive, degradation products. Active polyene fungicide typically implies the amount of dissolved polyene fungicide plus the amount of polyene fungicide present in suspended form, if any, in a preparation. Thus, a solution comprising 10 nM dissolved polyene fungicide and 10 nM suspended polyene fungicide (for example in the form of small crystals) is said to comprise 20 nM active polyene fungicide.

The function of a polyene fungicide is said to be preserved when its deactivation is prevented to an extent that the solution comprising the chelating agent and/or anti-oxidation agent comprises at least 10% more active fungicide after 3 months storage at 20°C compared to a similarly produced and stored solution, comprising essentially no chelating agent and/or anti-oxidation agent. Preferably, said solution comprising the chelating agent and/or anti-oxidation agent comprises at least 50% or at least 100%, more preferably at least 200% or at least 500%, or most preferably at least 3000% or at least 5000%, more active fungicide after 3 months storage at 20°C, compared to a similarly produced and stored solution comprising essentially no chelating agent and/or anti-oxidation agent.

When an aqueous solution comprising a polyene fungicide further comprises a polymer, the preserving effect of the presence of a chelating agent and/or anti-oxidation agent and fungicide activity is more pronounced. This is at least in part due to a decrease in the longevity of polyene fungicide activity in an aqueous solution comprising a polymer, in the absence of a chelating agent and/or anti-oxidation agent. This is particularly so for a suspension of polyene fungicide crystals. Therefore, an aqueous solution of the invention may comprise a polymer. Preferably, the said aqueous solution comprises a dispersion of polymer beads, a latex.

A latex is a dispersion of polymer particles (for example polymer beads) in water, made by emulsion polymerization. The viscosity of a latex is dependent on the particle size distribution and the medium in which the polymer particles are dispersed.

Large particles (from 2 to 3µm) are mostly stabilized by protective colloids (avoid settling) and small particles (from 0.1 to 0.3µm) are stabilized by electrostatic repulsion (Young R.G. and Lovell P.A., 1991, Introduction to polymers. second edition page 65-68 Chapman & Hall). The term 'stabilized' can mean the prevention of settling of the polymer particles at the bottom of a container comprising the emulsion of said particles, the latex.

A latex can comprise many different polymers. The present invention can be advantageously used with a latex comprising any kind of polymer. Preferably however, the latex comprises a polymer made from monomers from one or more of the following groups;
- Acrylic acids and methacrylic acids from monovalent aliphatic saturized alcohols and ethylalcohols of chain length's C₁ - C₁₈.
- Vinylesters of aliphatic saturated carbonic acids of chain length's C₁ - C₁₈.
- Vinylchlorine and vinylidenechlorine.
- Acrylnitrile and Metha-acrylnitrile.
- Ethene, Butadiene, Isoprene, Isobutylene, propylene, 2-chloro-butadiene, 2,3-dichlorobutadiene, tetrafluorethalene and styrol.
- Maleic-acid and fumaric-acid-esters from monovalent aliphatic saturated alcohols with chain length's C₁ - C₁₈.
- Vinylethers from monovalent aliphatic saturated alcohols with chain length's C₁ - C₁₈.
- Acrylic acids, Metha-acrylicacids, Crotonic-acid, Maleic-acid, Fumaric-acid, Itaconic-acid, Vinylsolfonic-acid, Styrolsulfonic-acid, half-esters of Maleic-acids or Fumaric-acids and the Itaconic-acids with monovalent aliphatic saturated alcohols with chain length's C₁ - C₁₈ and their Potassium- and Ammonium salts, Vinylpyrrolidone, Amides or Acrylic- and Methaacrylic-acids, and N-Methylolamide of Acrylic- and Methaacrylic-acids as their Ether, N-Vinyl-N-Methylacaramid.
- Acrylic-acid-esters of Diethylaminoethanols and/or Methylic-acidesters of Diethylaminoethanols.
- Acrylic-acid- and Methaacrylic-acidsesters of divalent aliphatic alcohols of chainlength's C₂ - C₁₈.
- Divinyl- and Di-allylesters from saturised and non-saturated aliphatic dicarbonacids of chain length's C₃ - C₁₈, Vinyl- and Allyl-esters of acrylic-acids and Crotonic-acids, Tri-allyl-cyanurate.
- Vinylacetate.
- Ethylene.
- Vinyl-ester saturated Fatty acids of chainlength's C₂ - C₁₈.
- Maleic-acid- and Fumaric-acid-esters from monovalent aliphatic saturated alcohols of chain length's C₄ - C₈.
- Acrylic-acid-ester monovalent saturated alcohols of chain length's C₄ - C₈ mix from alpha-Olefinen C₁₄ - C₁₆.
- or Sodium-2-Sulpho-ethyl-meta-acrylate.

More preferably however, the latex comprises a polymer made from monomers from one or more of the following groups;
- Vinylacetate.
- Ethylene.
- Vinyl-ester saturated Fatty acids of chain length's C₂ - C₁₈.
- Maleic-acid- and Fumaric-acid-esters from monovalent aliphatic saturised alcohols of chain length's C₄ - C₈.
- or Acrylic-acid-ester monovalent saturated alcohols of chain length's C₄ - C₈ mix from alpha-Olefinen C₁₄ - C₁₆.

Most preferably however, the latex comprises a polymer made from monomers from one or more of the following groups;
- Vinyl-ester saturated Fatty acids of chain length's C₂ - C₁₈.
- Maleic-acid- and Fumaric-acid-esters from monovalent aliphatic saturised alcohols of chain length's C₄ - C₈.

The present invention is particularly useful for the preservation of polyene fungicide activity in an aqueous solution that is used for the coating of a food, for example a meat or dairy product. Such a coating is preferably used in the coating of a cheese, a sausage or a derived product. Such solutions are commonly used in a setting wherein the same coating solution has to be used over a period of several months. During this period it is essential that the polyene fungicide remains sufficiently active to allow for the food coatings to retain sufficient antifungal activity. In view of the decrease in the activity of the polyene fungicide in the coating solution over time, the starting concentration of active polyene fungicide must be sufficiently high to allow the production of effective coatings also after several months. Since a polyene fungicide is one of the more costly components of the food coating solution, it is desired not to add too much polyene fungicide, since that would affect the pricing of the coating solution and of the coated food product. With the present invention, it is now possible to produce food coating solutions at a lower cost while still retaining the same quality of antifungal activity and/or potential.

A latex can, as discussed previously, be stabilized in a number of ways. In the invention it is preferred that an emulsion of polymer beads is stabilized through electrostatic interactions between those polymer beads. Without being bound by theory, it is believed that, in the production of the polymer beads that can be electrostatically stabilized, one or more compounds, especially emulsifying agents, can be used at higher concentrations. It is thought that such compounds, which can also comprise the said polymer promote deactivation of a polyene fungicide in said solution over time, when they are present in a solution comprising the said polyene fungicide. Promotion of deactivation can occur in a number of ways. For instance, through catalytic degradation of the fungicide or as another non-limiting example, through increasing solubility of the fungicide, in the case of a suspension of a polyene fungicide. Improving the solubility of a suspended fungicide can enhance deactivation due to the fact that, in general, a polyene in crystalline form is more stable as a suspension than in its dissolved form. Allowing improved solubility therefore increases the amount of deactivation of a polyene fungicide per time unit in the said suspension. Nevertheless, whatever the mechanism, it has been now observed that the presence of a chelating agent and/or an anti-oxidation agent in an aqueous solution comprising a polyene fungicide and comprising an emulsion of polymer beads, preserves, at least in part, the activity of the polyene fungicide in an aqueous solution.

A striking observation was that upon deactivation of a polyene fungicide in an aqueous solution comprising electrostatically stabilized polymer beads, in particular when the polyene fungicide comprises natamycin, no "normal" breakdown products were observed. This observation suggests that deactivation of the polyene fungicide in these solutions occurs through a different molecular mechanism than classical breakdown. It was observed that the present invention is particularly useful in preserving the activity of polyene fungicide in an aqueous solution comprising electrostatically stabilized polymer beads. This implies though not necessarily that the present invention is particularly effective in preventing at least in part this "atypical" deactivation of a polyene fungicide.

Preferably, the emulsion of polymer beads is in the form of an electrostatically stabilized emulsion of polymer beads. Preferably, the electrostatically stabilized emulsion comprises polymer beads with an average diameter of from 0.05 µm to 0.5 µm, more preferably from 0.1 to 0.3 µm, or most preferably said diameter averages around 0.2 µm.

The invention provides a method for preserving the activity of a polyene fungicide in an aqueous solution. Typically, the aqueous solution comprises a suspension of polyene fungicide crystals. In a preferred embodiment the aqueous solution of the invention comprises a suspended polyene fungicide, preferably in the form of suspended crystals of the said fungicide. More preferably, the suspended polyene fungicide comprises natamycin or a functional equivalent thereof. Functional equivalents of natamycin are substances which show the same fungicidal activity in kind, if not necessarily in amount as natamycin. Said substances consist of at least a macrocyclic lactone-ring with a number of conjugated carbon-carbon double bounds. Besides. natamycin per se, calcium, barium and magnesium salts can be used.

Derivatives such as natamycin methanol solvate, stabilized by storing under nitrogen gas and/or at -30°C, can be used. In addition to α-natamycin, δ-natamycin or γ-natamycin can also be used. Methods for the preparation of some functional equivalents of natamycin are described in US 5,821,233, for example, some equivalent salts of natamycin or functional equivalents thereof are described in Brik, H, "Natamycin" Analytical profiles of Drug Substances 10, 513-561. (1980).

The amount of a polyene fungicide in the invention can vary, but preferably ranges from 10 to 9000 ppm, or more preferably from 100 to1000 ppm.

In a preferred embodiment the activity of a polyene fungicide in an aqueous solution is at least in part preserved through providing said solution with a chelating agent. The term chelating agent means a compound capable of forming stable, usually water-soluble, complexes with a positively charged ion, preferably through electrostatic interaction. Preferably, positively charged ion is a metal ion. The activity of the chelating agent in preserving the activity of a polyene fungicide in an aqueous solution does not necessarily correlate with the chelating capacity of the chelating agent to chelate a positively charged ion. Preferably, a chelating agent suitable for use in the invention comprises an aminocarboxylate, for example an amino-acid such as glycine or a polyphosphate such as tripolyphosphoric acid.

Particularly preferred chelating agents are those that comprise only a low anti-oxidation capacity such as ethylenediamine-N,N,N',N'-tetraacetic acid (EDTA). Anti-oxidation agents are subject to oxidation and therefor have a tendency to decline in amount in the solution during storage and use. The decline in amount is of course dependent on the amount of oxidation that takes place, which is in term dependent on a number of variables including exposure of the solution to oxidation promoting conditions such as light and/or air. Chelating agents with no or little anti-oxidation activity do not suffer from this drawback. Therefore in a particularly preferred embodiment of the invention, the chelating agent comprises a low anti-oxidation activity or more preferably substantially no anti-oxidation activity. Preferably, the chelating agent comprises ethylenediamine-N,N,N',N'-tetraacetic acid (EDTA). Suitable functional equivalents of EDTA include the various salts of EDTA such as the various sodium, potassium, lithium and/or ammonium salts of EDTA, or the calcium or copper salts of EDTA. Examples of such equivalents include 1,3-diamino-2-hydroxypropane-N,N,N',N'-tetraacetic acid and 1,3-diamino-propane-N,N,N',N'-tetraacetic acid. An additional advantage of a chelating agent is that very low amounts of the chelating agent are very effective in preserving the activity of a polyene fungicide in an aqueous solution.

Preferably the amount of a chelating agent in said aqueous solution is from 0.01 to 5000 ppm. More preferably, from 0.1 to 1000 ppm, or most preferably from 1 to 300 ppm.

More than one chelating agent may be used in the invention, i.e. mixtures of chelating agents may be used. If more than one chelating agent is used, the total amount of chelating agent in the aqueous solution is from 0.01 to 5000 ppm, more preferably from 0.1 to 1000 ppm or most preferably from 1 to 300 ppm.

For the present invention, an anti-oxidation agent is preferably a non-acidic anti-oxidation agent. However, when an aqueous solution of the invention comprises an electrostatically stabilized suspension of polymer beads, the anti-oxidation agent can be any anti-oxidation agent. Preferably, the anti-oxidation agent comprises, Butyl-hydroxy-anisole (BHA), Butyl-hydroxy-toluene (BHT), a gallate, a tocopherol, ascorbyl palmitate and/or calcium ascorbate. More preferably, said anti-oxidation agent comprises BHA, BHT, a tocopherol and/or a gallate.

Preferably, the total amount of anti-oxidation agents is present in an aqueous solution an amount of from 10 to 10000 ppm.

The invention also provides an aqueous solution comprising a polyene fungicide and a chelating agent and/or an anti-oxidation agent, wherein the said chelating agent and the said anti-oxidation agent are the same agent or are different agents. Preferably, the solution of the invention further comprises a polymer. Preferably, the said aqueous solution comprises an emulsion of polymer beads. More preferably, the said emulsion is at least in part stabilized through electrostatic interaction of the polymer beads. Preferably, the said solution comprises a suspension of polyene fungicide particles, preferably in the form of crystals. It is particularly preferable that the said polyene fungicide comprises natamycin and/or a functional equivalent thereof.

Preferably the chelating agent comprises EDTA.

Preferably, the anti-oxidation agent comprises a non-acidic anti-oxidation agent.

Preferably, an aqueous solution of the invention can be stored for at least one week, preferably at least two weeks, more preferably at least one month and most preferably at least 3 months.

The aqueous solution of the invention may be packed in a container suitable for storage and/or shipment of the said aqueous solution. Preferably, the said aqueous solution is stored for at least one week, preferably at least two weeks, more preferably at least one month and most preferably at least 3 months.

An aqueous solution of the invention may be obtained by use of a method according the invention.

The invention also provides the use of a solution of the invention for at least in part preventing the growth of a fungus and/or a yeast. Preferably, said growth is prevented on a food product. Preferably, said food product is a cheese or a sausage.

The invention allows the selection of a wider range of polymer compositions for the preparation of an emulsion of polymer beads comprising a polyene fungicide, wherein the activity of said fungicide is at least in part stable, wherein said emulsion is suited for the production of food coatings comprising providing said emulsion with a chelating agent and/or an anti-oxidation agent. Preferably said wider range enables the use of polymer beads capable of forming a stable emulsion through electrostatic interaction between said beads in the preparation of a polymer emulsion comprising a polyene fungicide, wherein the activity of said fungicide is at least in part stable, wherein said emulsion is suited for the production of food coatings comprising providing said emulsion with a chelating agent and/or an anti-oxidation agent.

Some polymer compositions have more active fungicide deactivating power than others. For practical purposes, aqueous solutions of active fungicide comprising some kinds of polymer are sufficiently stable, though not completely, to allow their commercial exploitation. However, some polymer compositions most notably, but not limited to, for example homopolymers of vinylacetate or copolymers of vinylacetate with an acrylate or an ethene, do not, in the absence of the invention, allow the generation of a suitably stable emulsion of polymer beads comprising an active polyene fungicide to allow commercial exploitation. The invention thus, allows more competitive commercial exploitation. The invention now allows the selection of these polymers in the preparation of food coatings. Coatings comprising these polymers comprise beneficial characteristics that are well liked by a certain clientele. Preferably, said wider range of polymers includes the electrostatically stabilized polymers. Preferably, said chelating agent comprises EDTA.

The invention also provides the use of a chelating agent and/or an anti-oxidation agent in the preparation of an emulsion of polymer beads comprising a polyene fungicide for at least in part preserving the active polyene fungicide in the said emulsion.

The invention further provides a food coating comprising a polymer, polyene active fungicide and a chelating agent. Preferably, the chelating agent comprises EDTA.

In addition, the invention provides a food comprising or coated with a polymer composition comprising an active fungicide and a chelating agent. Preferably, the chelating agent comprises EDTA.

### Examples

### Material and methods

### Materials

### Base polymers used

- Mowilith DM 2 KL, a copolymer of vinylacetate and dibutylmealeate purchased by Clariant GmBH, Division Cellulose Ethers & Polymerisates, D-65926 Frankfurt am Main.
- Mowilith LDM 5041 approx.45%, a copolymer of vinylacetate and butylacrylate purchased by Clariant GmBH, Division Cellulose Ethers & Polymerisates, D-65926 Frankfurt am Main.
- Mowilith DV approx.50%, a homopolymer of vinylacetate purchaged by Clariant GmBH, Division Cellulose Ethers & Polymerisates, D-65926 Frankfurt am Main.
- Germul XE 9216,a copolymer of vinylacetate and dibutylmealeate purchaged by Ceca S.A., 92062 Paris-La Defense, France.
- Germul DQ 01, a copolymer of vinylacetate and dibutylmealeate purchaged by Ceca S.A., 92062 Paris-La Defense, France.

### Other materials used

- Di-sodium-EDTA, purchased by Chemolanda bv,2596 BP Den Haag, The Netherlands.
- Ammonia, purchased by Gaches Chimie France, 31750 Escalquens, France.
- Citric acid, purchased by Gaches Chimie France, 31750 Escalquens, France.
- Ascorbic acid, purchased by Merck KgaA, 64271 Darmstadt, Germany.
- Delvocid®, containing 50% active(w/w) natamycin, DSM Food Specialties, P.O. Box 1, 2600 MA, Delft, The Netherlands.

### Example 1

This example describes a method to prepare a formulation suitable for use as a food coating and which was developed to test the stability of natamycin over time in relation to the added base polymers.

The mixtures were made with an electric top stirrer, type RW 20 DZM,from Janke & Kunkel equipped with a rushton stirrer.

The mixtures were made by adding 500 gr Mowilith DM2KL, 1000 gr of the latex polymer, to be tested together with 4 gr Delvocid® and a protective additive. The total weight was made up to 2000 gr with tap water.

This crude mixture was mixed for 5 minutes to obtain a homogeneous mixture and was then adjusted to pH 4 - 7 with ammonia.

The mixture was stored at 18°C in a closed pot in the dark.

Several mixtures were made which are referred to as basepolymers 1-5. Basepolymer 1 comprised 1500 gr Mowilith DM2KL

Basepolymer 2 comprised 500 gr Mowilith DM2KL and 1000 gr Mowilith LDM 5041 approx.45%.

Basepolymer 3 comprised 500 gr Mowilith DM2KL and 1000 gr and Mowilith DV approx.50%.

Basepolymer 4 comprised 500 gr Mowilith DM2KL and 1000 gr and Germul XE 9216.

Basepolymer 5 comprised 500 gr Mowilith DM2KL and 1000 gr and Germul DQ 01.

The prepared mixtures were measured over time for the amount of active natamycin using the test described in Example 2.

### Example 2

This Example describes the method that was used to analyze the amount of active natamycin in a water based mixture of several components.
The method was a HPLC analysis based on the International Dairy Federation (Provisional ADF Standard 140, 1987) with a Lichrosorb RP 8 column.
Detection was by UV at 303 nm with a range of 0.1-4 mg/L with an injection volume of 20 µl.
Sample preparation was carried out by weighing 2 g prepared formulation with an accuracy of 1 mg in a measuring flask.
4 ml demineralized water (demiwater) was added and the mixture was stirred for 15 minutes to get a homogeneous suspension.
Subsequently 80 ml methanol was added and the mixture was stirred for 10 minutes. After ultrasonic treatment the solution was filled up to 100 ml with demiwater and then diluted and/or filtered (0.2 µm) before injecting.
The amount of active natamycin as ppm was calculated against a series of standards.

### Example 3

To test the stability of natamycin in combination with water based polymer dispersions mixtures, mixtures were made according to Example 1, and the rest activity of natamycin measured according to Example 2. The results are set out in table 1 (rest activity in %).

**Table 1**

| Rest activity of natamycin over time (in %) | | | | | |
|---|---|---|---|---|---|
| Time (weeks) | Basepolymer 1 | Basepolymer 2 | Basepolymer 3 | Basepolymer 4 | Basepolymer 5 |
| 1 | 100 | 70 | 88 | 78 | 93 |
| 3 | 100 | 22 | 54 | 62 | 85 |
| 5 | 100 | 5 | 44 | 53 | 82 |
| 7 | 100 | 2 | 33 | 42 | 74 |
| Basepolymer 1 is Mowilith DM2KL Basepolymer 2 is Mowilith LDM 5041 approx.45%. Basepolymer 3 is Mowilith DV approx.50%. Basepolymer 4 is Germul XE 9216 Basepolymer 5 is Germul DQ 01 Basepolymer 2 and 3 are completely electrostatical stabilized, basepolymer 4 and 5 partially and basepolymer 1 is stabilized by protective colloids. | | | | | |

### Example 4

The anti-oxidation agent ascorbic acid was added to the mixtures mentioned in Example 3 at the start of the time incubation to a final amount of 1000 ppm. The pH of the mixture was adjusted to 5 ± 1 with ammonia.
The rest activity of natamycin in combination with the said base polymers and ascorbic acid is set out in table 2.

**Table 2**

| Rest activity of natamycin over time (in %) | | | | | |
|---|---|---|---|---|---|
| Time (weeks) | Basepolymer 1 | Basepolymer 2 | Basepolymer 3 | Basepolymer 4 | Basepolymer 5 |
| 1 | 100 | 78 | 88 | 86 | 93 |
| 3 | 100 | 66 | 74 | 82 | 91 |
| 5 | 100 | 62 | 66 | 78 | 90 |
| 7 | 100 | 52 | 60 | 78 | 88 |

### Example 5

The chelating agent EDTA-disodiumsalt was added to the mixtures mentioned in Example 3 at the start of the time incubation to a final amount of 1000 ppm.
The rest activity of natamycin in combination with the said base polymers and EDTA-disodiumsalt is set out in table 4.

**Table 4**

| Rest activity of natamycin over time (in %) | | | | | |
|---|---|---|---|---|---|
| Time (weeks) | Basepolymer 1 | Basepolymer 2 | Basepolymer 3 | Basepolymer 4 | Basepolymer 5 |
| 1 | 100 | 96 | 100 | 100 | 100 |
| 3 | 100 | 95 | 98 | 100 | 99 |
| 5 | 100 | 88 | 97 | 95 | 97 |
| 7 | 100 | 81 | 95 | 94 | 96 |

### Example 6

Basepolymer 2 (Mowilith LDM 5041 approx.45%) was mixed with the chelating agent EDTA-disodiumsalt at the start of the time incubation ,in a concentration range of 100 - 5000 ppm to test the concentration influence of the chelating agent. The results are set out in table 5.

**Table 5**

| Rest activity of natamycin over time (in %) | | | | | | | | |
|---|---|---|---|---|---|---|---|---|
| T(weeks) | 0 ppm | 100 ppm | 250 ppm | 500 ppm | 750 ppm | 1000 ppm | 2000 ppm | 5000 ppm |
| 0 | 100 | 100 | 100 | 100 | 100 | 100 | 100 | 100 |
| 1 | 70 | 99 | 97 | 95 | 96 | 96 | 97 | 97 |
| 3 | 22 | 98 | 95 | 92 | 95 | 95 | 94 | 95 |
| 5 | 5 | 88 | 88 | 86 | 88 | 88 | 88 | 88 |
| 7 | 2 | 82 | 85 | 80 | 82 | 81 | 79 | 81 |

### Example 7

The base-polymers mentioned in example 3 were analyzed in heavy metal analyses to evaluate the possible influence of these metals on the stability of natamycin.
The analyses were carried out by PW 1404 Spectrophotometer, directly on the liquids in a liquid cup with a 2.5 µm molar foil in a helium atmosphere.
No heavy metals were detected (detection limit is < 5 ppm) in any of the samples.

### Example 8

The anti-oxidants BHA (Butylated Hydroxy Anisole) and tocopherol were added to a mixture described as basepolymer 3 in example 3 at the start of the incubation time to a final amount of 1000 ppm.
The rest activity of natamycin in combination with the base polymer and the used anti-oxidants is set out in table 6.

**Table 6**

| Rest activity of natamycin over time (in %) | | | |
|---|---|---|---|
| Time (weeks) | Without additive | With BHA | With tocopherol |
| 1 | 88 | 96 | 92 |
| 2 | 70 | 92 | 83 |
| 4 | 50 | 84 | 76 |

## Claims

1. A method for preserving the activity of natamycin in an aqueous solution comprising providing said solution with a chelating agent and/or an anti-oxidation agent, wherein said chelating agent and said anti-oxidation agent may be the same agent or a different agent, said chelating agent is glycine, polyphosphate, EDTA, a salt of EDTA, 1,3diamino-2-hydroxypropane-N,N,N',N'-tetraacetic acid or 1,3-diamino -propane -N, N, N', N'-tetraacetic acid and said anti-oxidation agent is a non-acetic anti-oxidation agent.

2. A method according to claim 1, wherein said solution further comprises a polymer.

3. A method according to claim 2, wherein said solution comprises an emulsion of polymer beads.

4. A method according to claim 3, wherein said emulsion is stabilized through electrostatic interaction of the polymer beads.

5. A method according to anyone of claims 1-4, wherein said aqueous solution comprises a suspension of natamycin crystals.

6. A method according to anyone of claims 1-5, wherein said natamycin comprises functional equivalent thereof.

7. A method according to anyone of claims 1-6, wherein said chelating agent comprises EDTA.

8. A method according to anyone of claims 1-7, wherein said anti-oxidation agent comprises BHA, BHT, a tocopherol or a gallate.

9. An aqueous solution comprising natamycin and a chelating agent and/or an anti-oxidation agent, wherein said chelating agent and said anti-oxidation agent may be the same agent or a different agent, said chelating agent is glycine, polyphosphate, EDTA, a salt of EDTA, 1,3-diamino-2-hydroxypropane-N, N, N', N'-tetraacetic acid or 1,3-diaminopropane -N, N, N', N'-tetraacetic acid and said anti-oxidation agent is a non-acetic anti-oxidation agent.

10. An aqueous solution according to claim 9, further comprising a polymer.

11. An aqueous solution according to claim 10, wherein said aqueous solution comprises an emulsion of polymer beads.

12. An aqueous solution according to claim 11, wherein said emulsion is stabilized through electrostatic interaction of the polymer beads.

13. An aqueous solution according to anyone of claims 9-12, wherein said solution comprises a suspension of natamycin particles, preferably in the form of crystals.

14. An aqueous solution according to anyone of claims 9-13, wherein said natamycin comprises a functional equivalent thereof.

15. An aqueous solution according to anyone of claims 9-14, wherein said chelating agent comprises EDTA.

16. An aqueous solution according to anyone of claims 9-15, wherein said anti-oxidation agent comprises BHA, BHT, a tocopherol or a gallate.

17. Use of a solution according to any of claims 9-16 in a method according to any of claims 1-8.

18. Use of a solution according to any of claims 9-16, for preventing the growth of a fungus and/or a yeast.

19. A use according to claim 18, wherein said growth is prevented on a food product.

20. A use according to claim 19, wherein said food product is a cheese and/or a sausage.

21. A method for enabling the use of polymer beads capable of forming a stable emulsion through electrostatic interaction between said beads in the preparation of a polymer emulsion comprising a natamycin, wherein the activity of said fungicide is stable, wherein said emulsion is suited for the production of food coatings comprising providing said emulsion with a chelating agent and/or an anti-oxidation agent.

22. A method according to claim 21, wherein said chelating agent comprises EDTA.

23. A method according to claim 21 or claim 22, wherein said wider range includes electrostatically stabilized polymers.

24. Use of a chelating agent and/or an anti-oxidation agent in the preparation of a polymer emulsion comprising a natamycin for preventing deactivation of said natamycin in said emulsion.

25. A food coating comprising a polymer, active natamycin and a chelating agent.

26. Food coated with a polymer composition comprising active natamycin and a chelating agent.

## Patentansprüche

1. Verfahren zum Erhalten der Aktivität von Natamycin in einer wässrigen Lösung, wobei die Lösung mit einem Chelatbildner und/oder einem Antioxidationsmittel versehen wird, wobei der Chelatbildner und das Antioxidationsmittel das gleiche Mittel oder verschiedene Mittel sein können sowie der Chelatbildner Glycin, Polyphosphat, EDTA, ein Salz von EDTA, 1,3-Diamino-2-hydroxypropan-N,N,N',N'-tetraessigsäure oder 1,3-Diaminopropan-N,N,N',N'-tetraessigsäure und das Antioxidationsmittel kein Essigsäurederivat ist.

2. Verfahren nach Anspruch 1, worin die Lösung ferner ein Polymer enthält.

3. Verfahren nach Anspruch 2, worin die Lösung eine Emulsion von Polymerperlen enthält.

4. Verfahren nach Anspruch 3, worin die Emulsion durch elektrostatische Wechselwirkung der Polymerperlen stabilisiert ist.

5. Verfahren nach einem der Ansprüche 1 bis 4, worin die wässrige Lösung eine Suspension von Natamycinkristallen enthält.

6. Verfahren nach einem der Ansprüche 1 bis 5, worin das Natamycin ein funktionelles Äquivalent hiervon enthält.

7. Verfahren nach einem der Ansprüche 1 bis 6, worin der Chelatbildner EDTA enthält.

8. Verfahren nach einem der Ansprüche 1 bis 7, worin das Antioxidationsmittel BHA, BHT, Tocopherol oder ein Gallat enthält.

9. Wässrige Lösung, enthaltend Natamycin und einen Chelatbildner und/oder ein Antioxidationsmittel, wobei der Chelatbildner und das Antioxidationsmittel das gleiche Mittel oder verschiedene Mittel sein können sowie der Chelatbildner Glycin, Polyphosphat, EDTA, ein Salz von EDTA, 1,3-Diamino-2-hydroxypropan-N,N,N',N'-tetraessigsäure oder 1,3-Diaminopropan-N,N,N',N'-tetraessigsäure und das Antioxidationsmittel kein Essigsäurederivat ist.

10. Wässrige Lösung nach Anspruch 9, die ferner ein Polymer enthält.

11. Wässrige Lösung nach Anspruch 10, worin die wässrige Lösung eine Emulsion von Polymerperlen enthält.

12. Wässrige Lösung nach Anspruch 11, worin die Emulsion durch elektrostatische Wechselwirkung der Polymerperlen stabilisiert ist.

13. Wässrige Lösung nach einem der Ansprüche 9 bis 12, worin die Lösung eine Suspension von Natamycinteilchen, vorzugsweise in Form von Kristallen, enthält.

14. Wässrige Lösung nach einem der Ansprüche 9 bis 13, worin das Natamycin ein funktionelles Äquivalent hiervon enthält.

15. Wässrige Lösung nach einem der Ansprüche 9 bis 14, worin der Chelatbildner EDTA enthält.

16. Wässrige Lösung nach einem der Ansprüche 9 bis 15, worin das Antioxidationsmittel BHA, BHT, ein Tocopherol oder ein Gallat enthält.

17. Verwendung einer Lösung nach einem der Ansprüche 9 bis 16 in einem Verfahren gemäß einem der Ansprüche 1 bis 8.

18. Verwendung einer Lösung nach einem der Ansprüche 9 bis 16 zum Verhindern des Wachstums eines Pilzes und/oder einer Hefe.

19. Verwendung nach Anspruch 18, worin das Wachstum auf einem Nahrungsmittelprodukt verhindert wird.

20. Verwendung nach Anspruch 19, worin das Nahrungsmittelprodukt ein Käse und/oder eine Wurst ist.

21. Verfahren zur Ermöglichung der Verwendung von Polymerperlen, die zur Bildung einer stabilen Emulsion durch elektrostatische Wechselwirkung zwischen den Perlen in der Lage sind, zur Herstellung einer Polymeremulsion, die Natamycin enthält, wobei die Aktivität des genannten Fungizids stabil ist und die Emulsion für die Herstellung von Nahrungsmittelbeschichtungen geeignet ist, wobei die Emulsion mit einem Chelatbildner und/oder einem Antioxidationsmittel versehen wird.

22. Verfahren nach Anspruch 21, worin der Chelatbildner EDTA enthält.

23. Verfahren nach Anspruch 21 oder 22, worin der genannte breitere Bereich elektrostatisch stabilisierte Polymere enthält.

24. Verwendung eines Chelatbildners und/oder eines Antioxidationsmittels bei der Herstellung einer Polymeremulsion, die Natamycin zur Verhinderung der Deaktivierung dieses Natamycins in der Emulsion enthält.

25. Nahrungsmittelbeschichtung, enthaltend ein Polymer, aktives Natamycin und einen Chelatbildner.

26. Nahrungsmittel, beschichtet mit einer Polymerzusammensetzung, die aktives Natamycin und einen Chelatbildner enthält.

## Revendications

1. Procédé de conservation de l'activité d'une natamycine dans une solution aqueuse comprenant la mise en oeuvre de ladite solution avec un agent chélatant et/ou un agent anti-oxydant, dans lequel ledit agent chélatant et ledit agent anti-oxydant peuvent être le même agent ou un agent différent, ledit agent chélatant est la glycine, un polyphosphate, l'EDTA, un sel d'EDTA, l'acide 1,3-diamino-2-hydroxypropane-N,N,N',N'-tétra-acétique ou l'acide 1,3-diamino-propane-N,N,N',N'-tétraacétique et ledit agent anti-oxydant est un agent anti-oxydant non acétique.

2. Procédé selon la revendication 1, dans lequel ladite solution comprend en outre un polymère.

3. Procédé selon la revendication 2, dans lequel ladite solution comprend une émulsion de perles de polymère.

4. Procédé selon la revendication 3, dans lequel ladite émulsion est stabilisée par interaction électrostatique des perles de polymère.

5. Procédé selon l'une quelconque des revendications 1 à 4, dans lequel ladite solution aqueuse comprend une suspension de cristaux de natamycine.

6. Procédé selon l'une quelconque des revendications 1 à 5, dans lequel ladite natamycine comprend un de ses équivalents fonctionnels.

7. Procédé selon l'une quelconque des revendications 1 à 6, dans lequel ledit agent chélatant comprend l'EDTA.

8. Procédé selon l'une quelconque des revendications 1 à 7, dans lequel ledit agent anti-oxydant comprend le BHA, le BHT, un tocophérol ou un gallate.

9. Solution aqueuse comprenant une natamycine et un agent chélatant et/ou un agent anti-oxydant, dans laquelle ledit agent chélatant et ledit agent anti-oxydant peuvent être le même agent ou un agent différent, ledit agent chélatant est la glycine, un polyphosphate, l'EDTA, un sel d'EDTA, l'acide 1,3-diamino-2-hydroxypropane-N,N,N',N'-tétraacétique ou l'acide 1,3-diamino-propane-N,N,N',N'-tétraacétique, et ledit agent anti-oxydant est un agent anti-oxydant non acétique.

10. Solution aqueuse selon la revendication 9, comprenant en outre un polymère.

11. Solution aqueuse selon la revendication 10, dans laquelle ladite solution aqueuse comprend une émulsion de perles de polymère.

12. Solution aqueuse selon la revendication 11, dans laquelle ladite émulsion est stabilisée par interaction électrostatique des perles de polymère.

13. Solution aqueuse selon l'une quelconque des revendications 9 à 12, dans laquelle ladite solution comprend une suspension de particules de natamycine, de préférence sous la forme de cristaux.

14. Solution aqueuse selon l'une quelconque des revendications 9 à 13, dans laquelle ladite natamycine comprend un de ses équivalents fonctionnels.

15. Solution aqueuse selon l'une quelconque des revendications 9 à 14, dans laquelle ledit agent chélatant comprend l'EDTA.

16. Solution aqueuse selon l'une quelconque des revendications 9 à 15, dans laquelle ledit agent anti-oxydant comprend le BHA, le BHT, un tocophérol ou un gallate.

17. Utilisation d'une solution selon l'une quelconque des revendications 9 à 16 dans un procédé selon l'une quelconque des revendications 1 à 8.

18. Utilisation d'une solution selon l'une quelconque des revendications 9 à 16 pour empêcher la croissance d'un fongus et/ou d'une levure.

19. Utilisation selon la revendication 18, dans laquelle ladite croissance est empêchée sur un produit alimentaire.

20. Utilisation selon la revendication 19, dans laquelle ledit produit alimentaire est un fromage et/ou une saucisse.

21. Procédé pour permettre l'utilisation de perles de polymère capables de former une émulsion stable par interaction électrostatique entre lesdites perles dans la préparation d'une émulsion de polymère comprenant une natamycine, dans lequel l'activité dudit fongicide est stable, ladite émulsion convenant à la production d'enrobages alimentaires comprenant la mise en oeuvre de ladite émulsion avec un agent chélatant et/ou un agent anti-oxydant.

22. Procédé selon la revendication 21, dans lequel ledit agent chélatant comprend l'EDTA.

23. Procédé selon la revendication 21 ou 22, dans lequel la plus large gamme comprend des polymères stabilisés au plan électrostatique.

24. Utilisation d'un agent chélatant et/ou d'un agent anti-oxydant dans la préparation d'une émulsion de polymère comprenant une natamycine pour empêcher la désactivation de ladite natamycine dans ladite émulsion.

25. Enrobage alimentaire comprenant un polymère, une natamycine active et un agent chélatant.

26. Aliment enrobé d'une composition polymère comprenant une natamycine active et un agent chélatant.
